## Europäisches Patentamt
## European Patent Office
## Office européen des brevets

(11) Numéro de publication: **0 098 409**
**B1**

(12) **FASCICULE DE BREVET EUROPÉEN**

(45) Date de publication du fascicule du brevet:
**15.01.86**

(21) Numéro de dépôt: **83105733.6**

(22) Date de dépôt: **11.06.83**

(51) Int. Cl.⁴: **C 21 B 7/20**

(54) **Dispositif d'entraînement d'une goulotte oscillante.**

(30) Priorité: **24.06.82 LU 84224**

(43) Date de publication de la demande:
**18.01.84 Bulletin 84/3**

(45) Mention de la délivrance du brevet:
**15.01.86 Bulletin 86/3**

(84) Etats contractants désignés:
**AT BE DE FR GB IT NL SE**

(56) Documents cité:
**DE-B-2 927 316**
**FR-A-1 596 116**
**FR-A-2 283 227**
**FR-A-2 292 943**
**GB-A-2 063 435**
**LU-A-82 173**

(73) Titulaire: **PAUL WURTH S.A., 32 rue d'Alsace,
L-1122 Luxembourg (LU)**

(72) Inventeur: **Legille, Edouard, 165 rte de Trèves,
L-Luxembourg (LU)**
Inventeur: **Lonardi, Emile, 30 rte de Schouweiler,
L-Bascharage (LU)**

(74) Mandataire: **Meyers, Ernest, Office de Brevets
Freylinger & Associés 46 rue du Cimetière B.P.
1153, L-1011 Luxembourg (LU)**

LIBER, STOCKHOLM 1986

EP 0 098 409 B1

## Description

La présente invention concerne un dispositif d'entraînement d'une goulotte oscillante pouvant pivoter autour de deux axes orthogonaux sous l'action d'un bras de commande pivotant ayant les mêmes degrés de liberté que la goulotte, comprenant un mécanisme de commande pour imprimer au bras de commande le mouvement que doit effectuer la goulotte, un dispositif de transmission pour reproduire le mouvement du bras de commande sur la goulotte et vice versa, dans lequel le mécanisme de commande est constitué par une tige d'entraînement susceptible de tourner autour de son axe longitudinal et d'être déplacée axialement et reliée à cet effet, à deux moyens d'entraînement indépendants, une extrémité de cette tige étant articulée sur un levier intermédiaire, articulé, à son tour, par l'intermédiaire d'une articulation universelle sur l'extrémité du bras de commande, de telle manière qu'un déplacement longitudinal de la tige de commande change l'inclinaison du bras de commande par rapport à un axe central confondu avec l'axe de ladite tige et qu'une rotation de celle-ci imprime un mouvement de précession conique du bras de commande autour dudit axe central.

Un dispositif de ce genre est décrit dans la demande de brevet français FR-A-2469683, qui se rapporte, plus précisement, à un dispositif de distribution de la matière de chargement dans un haut fourneau. Dans un mode de réalisation préféré, le bras de commande est monté à l'extérieur de la tête du four et le dispositif de transmission est conçu de telle manière que la goulotte de distribution et le bras de commande soient toujours parallèles l'un à l'autre. Pour effectuer une distribution en cercles il suffit, par conséquent, de faire tourner le bras de commande autour d'un axe vertical parallèle à l'axe vertical du four autour duquel doit tourner la goulotte.

Pour changer l'inclisaison de la goulotte, c'est-à-dire le rayon des cercles de dépôt de la matière de chargement, il suffit de changer l'inclinaison de ce bras de commande par rapport à son axe central de rotation.

Le levier intermédiaire et le bras de commande forment une charnière tournante à angle d'ouverture variable. C'est cet angle d'ouverture qui détermine l'inclinaison du bras de commande et celle de la goulotte par rapport à l'axe vertical.

Ce dispositif d'entraînement du bras de commande, aussi simple soit-il dans sa conception, a néanmoins l'inconvénient qu'il ne permet pas d'orienter la goulotte de distribution verticalement, c'est-à-dire de déverser la matière de chargement au centre de la surface de chargement. En effet, pour pouvoir amener la goulotte de distribution dans une telle position, il faudrait ouvrir la charnière formée par le levier intermédiaire et le bras de commande de 180°, c'est-à-dire que la tige d'entraînement, le levier intermédiaire et le bras de commande se retrouvent en alignement l'un sur l'autre. Il est bien entendu possible d'amener ces éléments dans cette position, mais, malheureusement, il n'est plus possible de les en dégager de façon contrôlée, car une poussée sur la tige d'entraînement, aussi forte soit-elle, ne permet pas une modification contrôlée de l'angle de la charnière lorsque celui-ci est de 180°.

Le but de la présente invention est d'éliminer cet inconvénient, autrement dit, de prévoir un dispositif d'entraînement du genre précité et modifié de telle manière que la goulotte de distribution puisse être orientée verticalement sans qu'elle reste bloquée dans cette position.

Pour atteindre cet objectif, l'invention propose un dispositif d'entraînement d'une goulotte oscillante du genre décrit dans le préambule, essentiellement caractérisé en ce que ladite articulation est associée à des moyens mobiles dont l'action tend à réduire l'angle que forment l'axe longitudinal du levier intermédiaire et l'axe longitudinal du bras de commande lorsque cet angle atteint 180°.

Selon un premier mode de réalisation, lesdits moyens sont constitués par un poussoir soumis à l'action de moyens élastiques prenant appui d'une part, sur un premier épaulement prévu sur la tige d'entraînement et, d'autre part, sur un deuxième épaulement prévu sur le levier intermédiaire de manière que le pivotement de la goulotte de distribution se fasse contre l'action de ces moyens élastiques.

Selon un deuxième mode de réalisation, il est prévu un anneau disposé concentriquement autour de la tige d'entraînement et susceptible de coulisser axialement, d'une part, sous l'action d'un ressort qui le maintient dans une position inopérative et, d'autre part, sous l'action d'un moteur, contre l'action du ressort, vers une position opérative dans laquelle il coopère avec un galet directement ou indirectement solidaire du levier intermédiaire, de manière à incliner celui-ci par rapport à l'axe longitudinal de la tige d'entraînement. Ledit galet peut être monté sur une pièce intermédiaire pouvant pivoter autour de l'axe d'articulation entre la tige d'entraînement et le levier intermédiaire, l'axe de rotation du galet étant perpendiculaire à l'axe longitudinal du levier intermédiaire.

Le moteur pour déplacer ledit anneau est, de préférence, constitué par un vérin hydraulique ou un moteur électrique.

Pour assurer le maintien et le guidage axial de l'anneau, celui-ci est, de préférence, pourvu d'un galet de guidage qui évolue dans une rainure fixe parallèle à l'axe de la tige d'entraînement.

Cette conception permet à la goulotte d'être orientée verticalement en ouvrant, par déplacement longitudinal de la tige d'entraînement, au maximum la charnière constituée par le levier intermédiaire et le bras de commande et d'amener ce dernier dans le prolongement de la tige d'entraînement sur ledit axe central. En effet, selon le premier mode de réalisation, ce mouvement se fait contre l'action du ressort de sorte que celui-ci tend à refermer cette charnière lorsque la tige d'entraînement est descendue pour dévier la goulotte de la position verticale. Il est bien entendu que la force du ressort doit être supérieure à celle exercée par le poids de la goulotte.

Dans le deuxième mode de réalisation, le dégagement de la goulotte de la position verticale est réalisé par déplacement axial de l'anneau sous l'action dudit moteur, ce qui provoque le pivotement du levier intermédiaire par l'action de l'anneau sur le galet.

D'autres particularités et caractéristiques ressortiront de la description détaillée d'un mode de réalisation avantageux présenté ci-dessous, à titre d'illustration, en référence aux figures annexées et dans lesquelles:

la figure 1 montre schématiquement une vue latérale, partiellement en coupe, d'un dispositif d'entraînement du genre décrit dans la demande de brevet français précitée FR-A-2469683, mais comportant l'amélioration proposée par la présente invention;

la figure 2 est une vue analogue à celle de la figure 1 montrant la position que doit occuper le dispositif d'entraînement pour que la goulotte de distribution soit orientée verticalement;

la figure 3 représente une vue analogue à celle de la figure 2 mais sous un angle de 90° par rapport à cette dernière;

la figure 4 montre schématiquement un deuxième mode de réalisation dans une position correspondant à une position verticale de la goulotte;

la figure 5 est une vue analogue à celle de la figure 4 dans une position inclinée de la goulotte et

la figure 6 montre schématiquement une vue en coupe suivant le plan de coupe VI-VI de la figure 4.

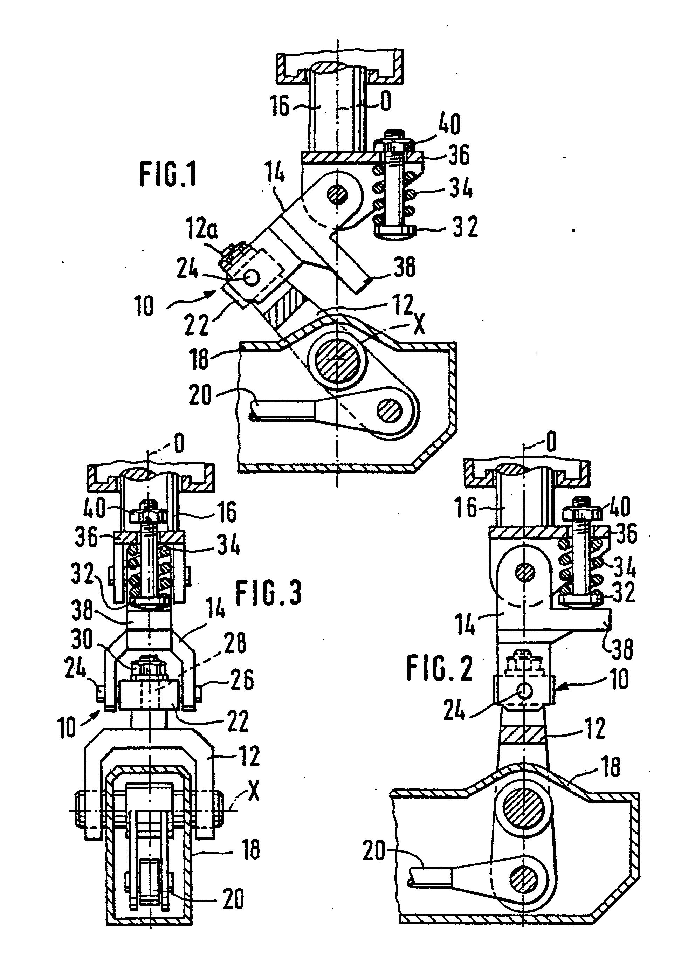

Sur les différentes figures on a utilisé les mêmes chiffres de référence pour désigner des éléments correspondants. Sur la figure 1, on distingue une charnière 10 à angle d'ouverture variable et pouvant tourner autor d'un bras de commande 12 est relié au constituée d'un bras de commande 12 pivotant autour d'un axe X perpendiculaire au plan de la feuille et d'un levier intermédiaire 14. Le bras de commande 12 est relié au moyen d'un mécanisme de transmission approprié à une goulotte de distribution non montrée sur les figures.

Ce mécanisme de transmission est de préférence du genre de celui proposé dans la demande de brevet européen EP-A-00 62769 c'est-à-dire qu'il est constitué d'une barre de transmission 20, actionné par le bras de commande pivotant 12 et évoluant à l'intérieur d'une fourche étanche 18 qui est susceptible de pivoter autour de son axe longitudinal.

Le levier intermédiaire 14 est relié à une tige d'entraînement 16 actionnée, à son tour, par des moyens d'entraînement appropriés, non montrés, et susceptibles de faire tourner la tige 16 autour de l'axe 0 et/ou de la déplacer longitudinalement le long de cet axe, mouvement qui provoque respectivement la rotation de la charnière 10 autour de l'axe 0 et/ou une modification de son angle d'ouverture.

La transformation de ce mouvement de précession conique du bras de commande 12 autour de l'axe 0 en mouvement correspondant de la goulotte de distribution est expliquée plus en détail dans les deux demandes de brevet précitées et on se référera à celles-ci pour ces explications supplémentaires.

L'articulation universelle de la charnière 10 entre le bras intermédiaire 14 et le bras de commande 12 doit être conçue de manière à permettre une modification de l'angle d'ouverture de la charnière par coulissement de la tige d'entraînement 16 ainsi qu'un pivotement relatif entre le bras de commande 12 et le levier 14 autour de l'axe longitudinal du bras de commande 12. Les figures et plus particulièrement la figure 3 illustre un mode de réalisation d'une telle articulation. Dans ce mode de réalisation, l'extrémité inférieure du levier intermédiaire 14 est conçue en forme de fourche entre les deux branches de laquelle se trouve un bloc de raccord 22 porté par deux tourillons 24 et 26 dans les deux branches de la fourche du levier 14. Ce bloc de raccord 22 peut donc pivoter autour de l'axe des tourillons 24 et 26 par rapport au levier 14 et vice versa.

Le bloc de raccord 22 comporte, en outre, un alésage central 28 dont l'axe est perpendiculaire à l'axe des tourillons 24 et 26. Dans cet alésage est engagée une tête cylindrique 12a formant l'extrémité supérieure du bras de commande 12 et permettant, de ce fait, un pivotement relatif entre cette tête cylindrique 12a et l'alésage 28. Pour maintenir le bras de commande 12 dans le bloc de raccord 22, on peut prevoir un filetage sur l'extrémité de la tête 12a afin d'y placer un moyen de sécurité tel que, par exemple, un écrou et un contre-écrou comme représenté en 30.

Pour orienter la goulotte de distribution verticalement, il est nécessaire de relever la tige d'entraînement 16 jusqu'à ce que la charnière 10 soit complètement ouverte et occupe la position selon la figure 2, c'est-à-dire que la tige d'entraînement 16, le levier intermédiaire 14 et le bras de commande 12 sont alignés coaxialement sur l'axe 0. Malheureusement, à partir de la position selon la figure 2, il n'est plus possible de revenir à une configuration, par exemple, selon la figure 1, par simple poussée sur la tige d'entraînement 16, lorsque le dispositif ne comporte pas l'amélioration décrite ci-dessous, ou d'y revenir de façon contrôlée car même si la charnière peut se replier, elle peut le faire d'un côté ou de l'autre.

Cette amélioration comporte, dans le premier mode de réalisation selon les figures 1 à 3, un poussoir mobile 32 monté sur un épaulement 36 solidaire de la tige d'entraînement 16. Ce poussoir 32 subit l'action de moyens élastiques comme par exemple, un ressort hélicoïdal 34 qui tend à maintenir le poussoir 32 dans la position de la figure 1. La longueur de ce poussoir 32 est règlable au moyen d'un écrou 40 de manière que, lorsque la charnière est ouverte par déplacement de la tige d'entraînement 16 de la position selon la figure 1 vers la position selon la figure 2, un épaulement 38 prévu sur le levier intermédiaire 14 agit sur ce poussoir 32 contre l'action du ressort 34 (voir figure 2).Par conséquent,en relachânt ou en inversant l'action sur la tige d'entraînement 16, dans la position selon la figure 2, l'action du ressort 34 sur le poussoir 32 et l'épaulement 38 tend à écarter le levier intermédiaire 14 de la position axiale selon la figure 2, c'est-à-dire tend à dégager la goulotte de la position verticale.

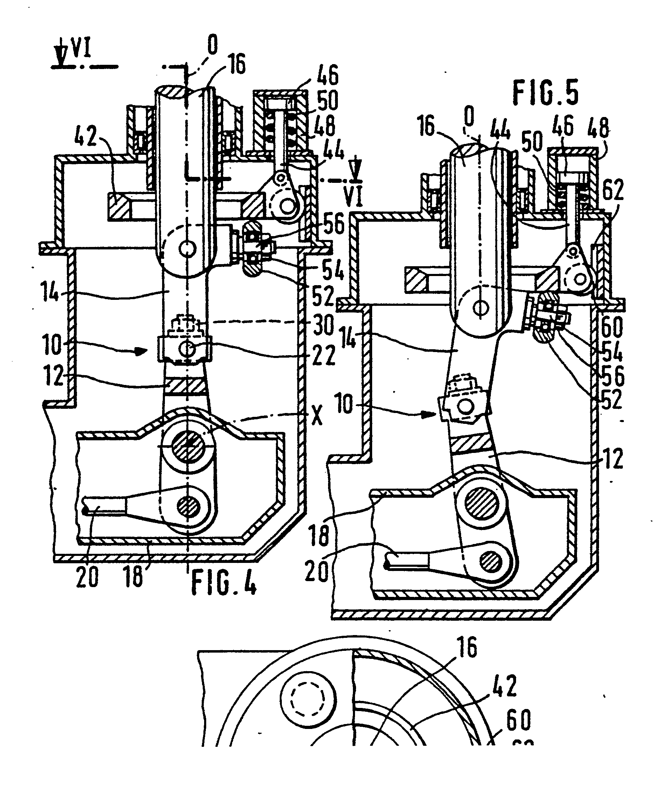

Dans le mode de réalisation illustré par les figures 4 à 6, les éléments 12 à 30 sont identiques aux éléments connus et correspondant des figures précédentes et ne seront donc plus décrits en détail.

Les moyens permettant d'incliner la goulotte à partir d'une position verticale comportent essentiellement un anneau 42, monté coaxialement autour de la tige 16 et porté par une tige de piston 44, sous l'action de laquelle cet anneau peut coulisser parallèlement à l'axe 0. Cette tige 44 peut être actionnée par voie hydraulique ou électrique et, à cet effet, elle peut être solidaire d'un piston 46 évoluant à l'intérieur d'un cylindre 48. Un ressort 50 prevu dans le cylindre 48 autour de la tige 44 tend à déplacer celle-ci ainsi que l'anneau 42 vers la position inopérative de la figure 4, alors que l'action d'un fluide hydraulique permet de descendre l'anneau 42 contre l'action du ressort 50 (voir figure 5). Il est bien entendu possible de prévoir d'autres moyens pour faire descendre l'anneau 42, pourvu que leur action puisse être coordonnée avec celle de la tige d'entraînement 16.

Le but de la descente de l'anneau 42 est de faire pivoter le levier intermédiaire 14 à partir de la position de la figure 4 vers une position semblable à celle de la figure 5. A cet effet, il est prévu un galet 52 monté par l'intermédiaire d'un roulement 54 sur un arbre 56, directement ou indirectement solidaire du levier 14 et dont l'axe est perpendiculaire à l'axe longitudinal de ce levier 14. Ce galet est nécessaire pour permettre la rotation de la tige 16 par rapport l'anneau non rotatif 42, pendant que celui-ci est en contact avec le galet 52.

La descente de l'anneau 42 est donc transformée en pivotement du levier 14 sous l'action de l'arbre 56 sur l'axe de pivotement du levier 14.

Pour assurer le maintien radial de l'anneau 42, celui-ci comporte, de préférence, comme le montre la figure 6, un galet de guidage 60 qui évolue, lors du mouvement axial de l'anneau 42, dans une rainure de guidage 62 prévue à cet effet sur le châssis fixe du dispositif. Il est, bien entendu, également possible dē prévoir simplement une glissière au lieu du galet.

Il est à souligner que l'homme du métier pourra prévoir différentes variantes pour déplacer l'anneau 42, sans sortir du cadre de l'invention. Il est notamment possible d'agir directement sur l'anneau 42, par exemple, au moyen d'engrenages, crémaillères, vis sans fin, etc.

## Revendications

1. Dispositif d'entraînement d'une goulotte oscillante pouvant pivoter autour de deux axes orthogonaux sous l'action d'un bras de commande pivotant ayant les mêmes degrés de liberté que la goulotte, comprenant un mécanisme de commande pour imprimer au bras de commande le mouvement que doit effectuer la goulotte, un dispositif de transmission pour reproduire le mouvement du bras de commande sur la goulotte et vice versa, dans lequel le mécanisme de commande est constitué par une tige d'entraînement susceptible de tourner autour de son axe longitudinal et d'être déplacée axialement et reliée, à cet effet, à deux moyens d'entraînement indépendants, une extrémité de cette tige étant articulée sur un levier intermédiaire, articulé, à son tour, par l'intermédiaire d'une articulation universelle sur l'extrémité du bras de commande, de telle manière qu'un déplacement longitudinal de la tige de commande change l'inclinaison du bras de commande par rapport à un axe central confondu avec l'axe de ladite tige et qu'une rotation de celle-ci imprime un mouvement de précession conique du bras de commande autour dudit axe central, caractérisé en ce que l'articulation (10) est associée à des moyens mobiles (32, 42) dont l'action tend à réduire l'angle que forment l'axe longitudinal du levier intermédiaire et l'axe longitudinal du bras de commande lorsque cet angle atteint 180°

2. Dispositif selon la revendication 1, caractérisé en ce que lesdits moyens sont constitués par un poussoir (32) soumis à l'action de moyens élastiques (34) prenant appui, d'une part, sur un premier épaulement (36) prévu sur la tige d'entraînement (16) et, d'autre part, sur un deuxième épaulement (38) prévu sur le levier intermédiaire (14) de manière que le pivotement de la goulotte de distribution se fasse contre l'action de ce ressort (34).

3. Dispositif selon la revendication 2, caractérisé par un écrou d'ajustement (40) pour regler la course du poussoir (32).

4. Dispositif selon la revendication 1, caractérisé par un anneau (42) disposé concentriquement autour de la tige d'entraînement (16) et susceptible de coulisser axialement, d'une part, sous l'action d'un ressort (50) qui le maintient dans une position inopérative et, d'autre part, sous l'action d'un moteur, contre l'action du ressort (50), vers une position opérative dans laquelle il coopère avec un galet (52) directement ou indirectement solidaire du levier intermédiaire (14), de manière à incliner celui-ci par rapport à l'axe longitudinal (0) de la tige d'entraînement (16).

5. Dispositif selon la revendication 4, caractérisé en ce que ledit galet (52) est monté sur une pièce intermédiaire pouvant pivoter autour de l'axe d'articulation entre la tige d'entraînement (16) et le levier intermédiaire (14), l'axe de rotation (56) du galet (52) étant perpendiculaire à l'axe longitudinal du levier intermédiaire (14).

6. Dispositif selon la revendication 4, caractérisé en ce que le moteur pour déplacer ledit anneau (42) est constitué par un vérin (48) pneumatique ou hydraulique.

7. Dispositif selon la revendication 4, caractérisé en ce que le moteur pour déplacer ledit anneau (42) est constitué par un moteur électrique.

8. Dispositif selon l'une quelconque des revendications 4 à 7, caractérisé par un galet de guidage (60) qui évolue dans une rainure fixe (62) parallèle à l'axe (0) de la tige d'entraînement (16).

## Claims

1.- Apparatus for driving an oscillating spout capable of pivoting about two orthogonal axes under the action of a pivoting control arm having the same degrees of liberty as the spout, comprising a control mechanism serving to cause the control arm to perform the movement required from the spout, a transmission device serving to cause the movement of the control arm to be reproduced by the spout and vice-versa, wherein the control mechanism consists of a driving rod capable of turning about its longitudinal axis and undergoing axial displacement and connected for this purpose to two independent driving means, the end of this rod being articulated to an intermediate lever articulated in its turn via a universal joint to the end of the control arm, in such a way that a longitudinal displacement of the control rod changes the angle of inclination of the control arm in relation to a central axis identical with the axis of the said rod and that a rotation of the latter causes a conical precession movement of the control arm about the said central axis, wherein the said universal joint (10) is associated with movable means (32,42) of which the action tends to reduce the angle formed by the longitudinal axis of the intermediate lever and the longitudinal axis of the control arm when this angle reaches 180°.

2.- Apparatus in accordance with Claim 1, wherein the said means consist of a pusher (32) subjected to the action of elastic means (34) resting on the one hand on a first shoulder (36) provided on the driving rod (16) and on the other hand on a second shoulder (38) provided on the intermediate lever (14) in such a way that pivoting movement of the distribution spout is effected in opposition to the action of the said spring (34).

3.- Apparatus in accordance with Claim 2, comprising an adjusting nut (40), serving to regulate the travel of the pusher (32).

4.- Apparatus in according with Claim 1, comprising a ring (42) positioned concentrically arount the driving rod (18) and capable of sliding in an axial direction, on the one hand under the action of a spring (50) which keeps it in an inoperative position and on the other hand under the action of a motor, in opposition to the action of the spring (50), to an operative position in which it interacts with a roller (52) directly or indirectly integral with the intermediate lever (14), in such a way as to cause the latter to assume an inclined position in relation to the longitudinal axis (0) of the driving rod (16).

5.- Apparatus in accordance with Claim 4, wherein the said roller (52) is mounted on an intermediate piece (58) capable of pivoting about the articulation axis between the driving rod (16) and the intermediate lever (14), the rotation axis (56) of the roller (52) being perpendicular to the longitudinal axis of the intermediate lever (14).

6.- Apparatus in accorgance with Claim 4, wherein the motor serving to displace the said ring (42) consists of a pneumatic or hydraulic jack (48).

7.- Apparatus in accordance with Claim 4, wherein the motor serving to displace the said ring (42) consists of an electric motor.

8.- Apparatus in accordance with anyone of Claims 4-7, comprising a guide roller (60) which performs its cycle of movements in a fixed groove (62) parallel to the axis (0) of the driving rod (16).

## Patentansprüche

1. Vorrichtung zum Antrieb einer schwingenden Schurre, die um zwei orthogonale Achsen unter Wirkung eines schwenkbaren Steuerarmes, der die gleichen Beweglichkeitsgrade wie die Schurre hat, schwenken kann, die einen Antriebsmechanismus, um auf den Steuerarm die Bewegung, die die Schurre ausführen soll, aufzubringen, eine Transmissionsvorrichtung zur Reproduktion der Bewegung des Steuerarmes auf die Schurre und umgekehrt, aufweist, bei welcher der Antriebsmechanismus durch eine Mitnehmerstange gebildet ist, die um ihre Längsachse drehbar und achsial verschiebbar ist, und die zu diesem Zweck mit zwei unabhängigen Antriebsmitteln verbunden ist, wobei ein Ende dieser Stange auf einem Zwischenhebel gelenkig gelagert ist, der seinerseits durch die Zwischenschaltung eines Universalgelenks am Ende des Steuerarmes gelenkig gelagert ist, derart daß eine Längsverschiebung der Steuerstange (richtig:Mitnehmerstange) die Neigung des Steuerarmes in Bezug auf eine zentrale Achse, die mit der Achse besagter Stange zusammenfällt, ändert und daß eine Rotation derjenigen eine Bewegung von konischer Präzession des Steuerarmes um besagte zentrale Achse bewirkt, dadurch gekennzeichnet, daß das Gelenk (10) mit beweglichen Mitteln (32, 42) verbunden ist, deren Wirkung danach trachtet, den Winkel, den die Längsachse des Zwischenhebels und die Längsachse des Steuerarmes bilden, zu reduzieren, wenn dieser Winkel 180° erreicht.

2. Vorrichtung gemäß Anspruch 1, dadurch gekennzeichnet, daß besagte Mittel aus einem Druckknopf (32) gebildet sind, der unter Wirkung von elastischen Mitteln (34) steht, in Anlage einerseits an einem ersten Vorsprung (36), der an der Mitnehmerstange (16) vorgesehen ist, und andererseits an einem zweiten Vorsprung (38), der am Zwischenhebel (14) vorgesehen ist, derart, daß die Schwenkbewegung der Verteilungsschurre gegen die Wirkung dieser Feder erfolgt.

3. Vorrichtung gemäß Anspruch 2, gekennzeichnet durch eine Feststellmutter (40), um den Gang des Druckknopfes (32) zu regeln.

4. Vorrichtung gemäß Anspruch 1, gekennzeichnet durch einen Ring (42) der konzentrisch um die Mitnehmerstange (16) angeordnet ist und achsial gleitbar ist, einerseits unter Wirkung einer Feder (50), die ihn in Stillstandsposition hält, und andererseits unter Wirkung eines Motors, gegen die Wirkung der Feder (50) zu einer Arbeitsstellung, in welcher er mit einer Rolle (52),die direkt oder indirekt mit dem Zwischenhebel (14) verbunden ist, zusammenwirkt, in einer Art, um denjenigen in Bezug auf die Längsachse 0 der Mitnehmerstange (16) zu neigen.

5. Vorrichtung gemäß Anspruch 4,dadurch gekennzeichnet,daß besagte Rolle (52) an einem Verbindungsstück gelagert ist, das um die Gelenkachse zwischen der Mitnehmerstange (16) und dem Zwischenhebel (14) schwenken kann,wobei die Rotationsachse (56) der Rolle (52) lotrecht auf die Längsachse des Zwischenhebels (14) verläuft.

6. Vorrichtung gemäß Anspruch 4, dadurch gekennzeichnet, daß der Motor für die Versetzung, besagten Ringes (42) aus einer pneumatischen (48) oder hydraulischen Winde gebildet ist.

7. Vorrichtung gemäß Anspruch 4, dadurch gekennzeichnet, daß der Motor für die Versetzung des Ringes (42) aus einem elektrischen Motor gebildet ist.

8. Vorrichtung gemäß einem der Ansprüche 4 bis 7, gekennzeichnet durch eine Führungsrolle (60), die sich in einer fixen Rille (62) parallel zur Achse (0) der Mitnehmerstange (16) hin- und herbewegt.

FIG.1

FIG.2

FIG.3

0 098 409

FIG.5

FIG.4